# EUROPÄISCHE PATENTSCHRIFT

(11) **EP 2 699 829 B1**
(45) Veröffentlichungstag und Bekanntmachung des Hinweises auf die Patenterteilung: **20.01.2016**
(21) Anmeldenummer: 12718904.1
(22) Anmeldetag: 31.03.2012
(51) Int. Cl.: F16K 17/04, F16K 17/06, F16K 31/06

(54) **SCHALTBARES DRUCKBEGRENZUNGSVENTIL**
SWITCHABLE PRESSURE-LIMITING VALVE
SOUPAPE DE LIMITATION DE PRESSION COMMUTABLE

(30) Priorität: 12.04.2011 DE 102011016819
(43) Veröffentlichungstag der Anmeldung: 26.02.2014
(73) Patentinhaber: Thomas Magnete GmbH, 57562 Herdorf (DE)
(72) Erfinder: ROLLAND, Thomas, 57580 Gebhardshain (DE); HECK, Mike, 57520 Derschen (DE)
(86) Internationale Anmeldenummer: PCT/EP2012/001450
(87) Internationale Veröffentlichungsnummer: WO 2012/139717

(56) Entgegenhaltungen:
- EP-B1- 1 916 460
- DE-A1- 4 404 350
- FR-A1- 2 906 594
- GB-A- 2 201 755
- JP-A- 2001 107 909
- US-A- 5 265 843

## Beschreibung

Die Erfindung betrifft ein schaltbares Druckbegrenzungsventil entsprechend dem Oberbegriff des ersten Patentanspruchs.
Druckbegrenzungsventile werden als bekannt vorausgesetzt, ein schaltbares Druckbegrenzungsventil wurde in EP 1 916 460 B1 beschrieben. Die Druckschriften JP 2001 107 909 A und FR 2 906 594 A1 zeigen elektrisch stufenlos verstellbare Druckbegrenzungsventile.
Aufgabe dieser Erfindung ist es, die technische Lehre dieses Patents fortzuentwickeln, damit das Ventil auch mit aggresiven und stark veschmutzten Flüssigkeiten eingesetzt werden kann.

Andere Aufgaben, die das Patent EP 1 916 460 B1 löst, nämlich den zu begrenzenden Druck umschaltbar zu machen, den Einfluss der Spulentemperatur auf den Regeldruck zu vermindern, den Einfluss der Versorgungsspannung zu vermindern und einen geringen Haltestrom zu ermöglichen, bleiben für die Fortentwicklung erhalten.

Bei den hier einzusetzenden Flüssigkeiten ist es erforderlich, eine vollständige Medientrennung zwischen dem Ankerraum des Magneten und den von der genannten Flüssigkeit benetzten Räumen vorzunehmen. Dazu ist am besten eine medientrennende Membran geeignet, alle anderen bekannten Methoden der Medientrennung, wie dynamische Dichtungen oder eine Verlagerung des Ankers in den Flüssigkeitsraum, haben sich als weniger geeignet erwiesen.

Dynamische Dichtungen bewirken mechanische Reibung und verschleißen unter dem Einfluß der verschmutzten Flüssigkeit. Eine Verlagerung des Ankers in den Flüssigkeitsraum und eine Medientrennung um den Anker herum durch einen Becher aus dünnem nichtmagnetischem Material schützt den Anker nicht vor der aggressiven und verschmutzten Flüssigkeit, es kommt zu Reibung und Verschleiß in der Ankerlagerung und beim Aufschlagen des Ankers auf den Magnetpol zum Verschleiß der Kontaktflächen.
Die Verwendung einer Membran in einem mechanischen Druckbegrenzungsventil ist bekannt, zum Beispiel aus den Druckschriften DE 1025227 B, DE 44 04 350 A1 und GB 2 201 755, auch die Verwendung einer Membran in einem Schaltventil ist aus der Druckschrift US 5 265 843 A bekannt, allerdings ohne Druckregelfunktion.
Hier wird die Membran als Dichtkörper eingesetzt, sie wird durch einen Stößel gegen einen Dichtsitz gedrückt. Gegen den Stößel wirken die Druckkräfte des Fluids.
Bei der Verwendung einer Membran zur Medientrennung ist es vorteilhaft, die mechanische Belastung der Membran zu begrenzen. Das wird erfindungsgemäß dadurch erreicht, dass der Anker des Magneten nicht direkt oder indirekt (über den Stößel) auf die Membran aufschlägt, sondern lediglich eine Feder mehr oder weiniger stark spannt, die ihrerseits mittels eines Stößels auf die Membran drückt.
Abhängig davon, ob man zwischen zwei verschiedenen Regeldrücken umschalten möchte, oder die Regelfunktion ein- und ausschalten möchte, läßt man eine zweite Feder gleichsinnig den Stößel beaufschlagen oder läßt sie gegensinnig den Stößel zum Anker hin drücken. Im letzteren Fall kann das Ventil auch ohne einen beachtlichen Druck am P-Anschluß offen sein, wenn die öffnende Feder stärker ist als die schließende.
Der Anker schlägt am Ende seiner Vorwärtsbewegung auf den Magnetpol auf, oder auf eine nichtmagnetische Anschlagscheibe, die auf dem Magnetpol aufliegt. Durch dieses Anschlagen des Ankers ist die Kraft auf den Stößel nicht von der Magnetkraft abhängig, sondern nur eine Funktion des Ankerhubs und der Federsteifigkeit. Das ist insofern vorteilhaft, als die Magnetkraft bei einer Ansteuerung des Magneten mit der Bordspannung eines Fahrzeugs von dieser Bordspannung und von der Magnettemperatur abhängig ist. Auch bei einer Ansteuerung des Magneten mit einen geregelten Strom ergibt sich noch ein Vorteil in der Genauigkeit der Kraft, weil die Kräfte einer Mehrzahl von Elektromagneten eine größere Streuung aufweisen als die Federkräfte einer Mehrzahl von Federn.
Wenn der Anker direkt auf den Magnetpol aufschlägt, muss durch eine geeignete Wahl der Werkstoffe des Ankers und des Magnetpols die Herausbildung einer magnetischen Remanenz gering gehalten werden. Wenn man eine nichtmagnetische Anschlagscheibe verwendet, sollte diese recht dünn sein, damit auch der Restluftspalt des Elektromagneten gering sein kann, was dann einen geringen notwendigen Haltestrom zur Folge hat.

Es läßt sich auch eine Variante darstellen, bei der der Anker im stromlosen Zustand des Magneten am vorderen, dem Stößel zugewandten Anschlag anliegt und im bestromten Zustand die hintere, von dem Stößel abgewandte Position einnimmt. Dann ist eine weitere Feder erforderlich, die den Anker im stromlosen Zustand des Magneten gegen den vorderen Anschlag drückt. Die Funktion dieser Variante unterscheidet sich von der vorher beschriebenen Variante nur in der Zuordnung der Regeldrücke zu den Schaltzuständen, der höhere Regeldruck ergibt sich hier im stromlosen Zustand.
Bei dem geringen Restluftspalt im eingeschalteten Zustand genügt ein geringer Haltestrom durch die Spule, um den Anker an dem zugeordneten Anschlag zu halten. Dieser Haltestrom kann erheblich kleiner sein, als der Strom, der zu Beginn der Ankerbewegung erforderlich ist. Ein solcher Stromverlauf wird zum Beispiel in bekannter Weise durch eine elektrische Ansteuerung erzeugt, die aus einem Sollwertgeber und einem Stromregler besteht. Wenn der Magnet nicht durch einen geregelten Strom, sondern durch eine gesteuerte Spannung angesteuert werden soll, kombiniert man einen Sollwertgeber mit einem steuerbaren Spannungsteiler, der zum Beispiel nach dem Prinzip der Pulsweitenmodulation arbeitet.

Das erfindungsgemäße Ventil läßt sich in Anlagen mit aggressiven oder verschmutzten Flüssigkeiten zur Druckbegrenzung verwenden, wobei die Höhe des Grenzdrucks durch das Schalten des Elektromagneten beeinflußbar ist.

### Bilder:

Fig. 1: Schaltbares Druckbegrenzungsventil mit drückendem Magnet
Fig. 2: Elektrische Ansteuerung
Fig. 3: Schaltbares Druckbegrenzungsventil mit ziehendem Magnet

### Beispielhafte Ausführungen:

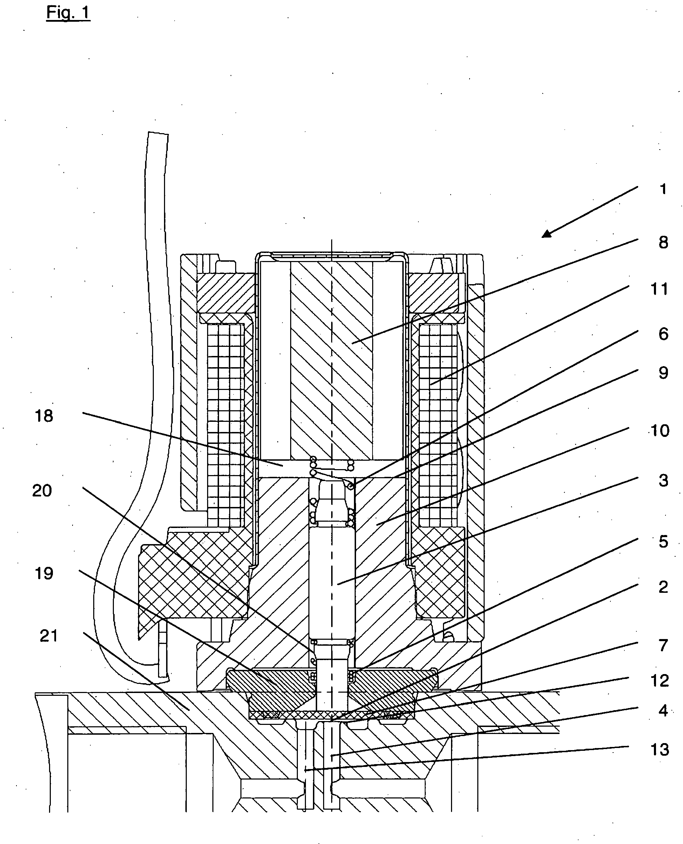

Fig. 1 zeigt das schaltbare Druckbegrenzungsventil mit seinem Elektromagneten 1. Darin ist eine Spule 11 enthalten, die im bestromten Zustand einen Magnetfluss erzeugt, der am Luftspalt zwischen dem Anker 8 und dem Magnetpol 10 eine Kraft hervorruft, die den Anker zum Anschlag 9 bewegt. Dabei spannt der Anker die Feder 6 stärker, und diese Feder drückt auf den Stößel 3. Die Feder 6 ist so ausgelegt, dass sie bei dem auslegungsgemäßen Strom durch die Spule 11 dem Anker 8 ermöglicht, den Anschlag 9 zu erreichen und die Feder um einen eng tolerierten Weg zu spannen. Damit ist die Kraft der Feder 6 bei bestromter Spule 11 in ihrer Größe unabhängig von dem genauen Wert des Stroms, geringe Schwankungen dieses Stroms, die durch die Spulentemperatur oder durch Änderungen der Versorgungsspannung hervorgerufen werden, wirken sich nicht auf die Kraft der Feder 6 aus.
Der Stößel 3 wird von der Feder 6 gegen die Feder 5 und gegen die Membran 7 gedrückt, die Membran wird zusätzlich vom Druck des Fluids unter der Membran beaufschlagt. Solange die Membran auf dem Dichtsitz 12 aufliegt, wirkt der Druck am P-Anschluss 4 mit der inneren Fläche des Dichtsitzes auf die Membran und der Druck am T-Anschluss 13 mit der äußeren ringförmigen Fläche.
Die Kraftbilanz an der Membran und an dem auf ihr aufliegenden Stößel bewirkt ein Öffnen oder Schließen des Ventils, überschreitet der Druck am P-Anschluss 4 eine durch die Summe der anderen Kräfte vorgegebene Grenze, so öffnet das Ventil und ermöglicht ein Abfließen des Fluids vom P-Anschluss 4 zum T-Anschluss 13. Dadurch fällt der Druck am P-Anschluss 4 ab, das Ventil wirkt für das Fluid am P-Anschluss 4 druckbegrenzend.
Der Grenzdruck für diese Druckbegrenzungsfunktion wird durch die Lage des Ankers 8 beeinflusst, ist der Elektromagnet eingeschaltet, liegt der Anker 8 am Magnetpol 10 an, die Feder 6 ist stärker gespannt, die Kraft des Stößels auf die Membran 7 ist größer und der sich einstellende Grenzdruck ist ebenfalls größer. Ist der Magnet ausgeschaltet, liegt der Anker,8 am hinteren Anschlag an, die Feder 6 ist nur wenig gespannt und der Grenzdruck ist entspechend kleiner.
Die Membran 7 erfüllt zwei zusätzliche Abdichtfunktionen, nämlich eine Abdichtung zwischen dem T-Anschluss 13 und der Umgebung sowie zwischen dem T-Anschluss 13 und dem Arbeitsraum des Stößels 20. Damit die Membran diese Abdichtfunktionen erfüllen kann, wird sie zwischen einer Distanzscheibe 19 und dem Gehäuse 21 verspannt.

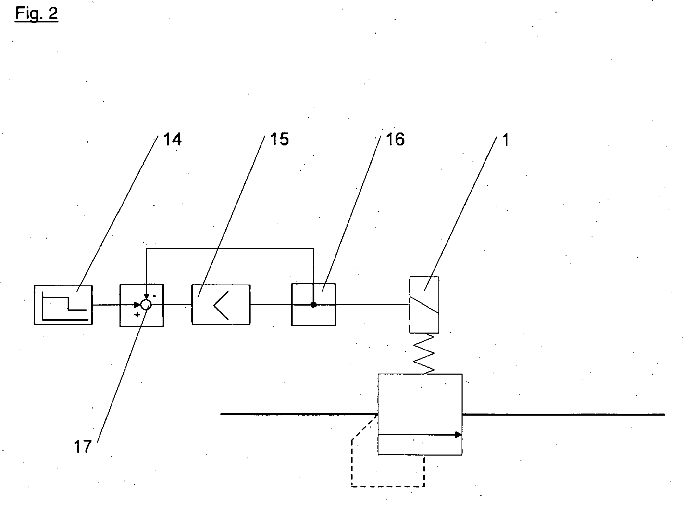

Fig. 2 zeigt eine beispielhafte elektrische Ansteuerung des Elektromagneten 1. Auf ein äußeres Schaltsignal hin erzeugt der Sollwertgeber 14 ein zeitlich variables Sollwertsignal für den Strom. Dieses Sollwertsignal wird im Vergleicher 17 mit dem Istwertsignal des Stroms verglichen. Entsprechend der Differenz beider Signale schaltet der Schaltregler 15 die Spannung ein oder aus. Aufgrund der Spannung fließt ein Strom durch die Spule des Elektromagneten 1, der durch den Widerstand und die Induktivität der Spule begrenzt wird. In der Strommesseinrichtung 16 wird dieser Strom gemessen, das Ergebnis dieser Messung ist das Istwertsignal.
Das Sollwertsignal liegt nach dem Einschalten während der ersten 50 ms auf einem hohen Wert, zum Beispiel 2 A, um eine sichere und schnelle Bewegung des Ankers zu bewirken. Danach senkt sich der Sollwert auf einen deutlich geringeren Wert ab, zum Beispiel 0,5 A, der noch ausreicht, den Anker am Anschlag zu halten, aber eine starke Erwärmung der Magnetspule und einen hohen Energieverbrauch vermeidet.

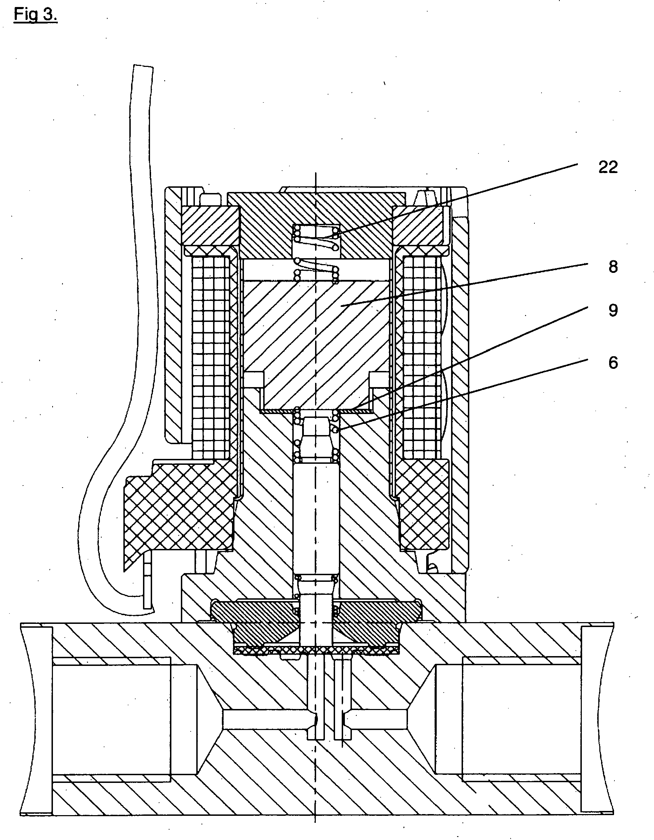

Fig. 3 zeigt eine zweite Variante des schaltbaren Druckregelventils mit einem Anker 8, der im stromlosen Zustand des Magneten von der Feder 22 an den vorderen, dem Stößel 3 zugewandten Anschlag zur Anlage gebracht wird. Dabei wird die Feder 6 gespannt. Wird der Magnet bestromt, bewegt sich der Anker zum hinteren Anschlag und entlastet die Feder 6. Im Vergleich zu der Ausführung mit einem drückenden Magneten ergibt sich eine Umkehr der Funktion des Magneten, alle anderen Funktionen des Ventils bleiben gleich. Im stromlosen Zustand des Magneten stellt sich der hohe Grenzdruck und im bestromten Zustand stellt sich der niedrige Grenzdruck am P-Anschluss 4 ein.

### Liste der Bezugszeichen

- 1: Elektromagnet
- 2: Vorrichtung zu Öffnen und Schließen
- 3: Stößel
- 4: P-Anschluss für das Fluid
- 5: Feder
- 6: Feder
- 7: Membran
- 8: Anker
- 9: Anschlag
- 10: Magnetpol
- 11: Spule
- 12: Dichtsitz
- 13: T-Anschluss für das Fluid
- 14: Sollwertgeber
- 15: Schaltregler
- 16: Strommesseinrichtung
- 17: Vergleicher
- 18: Ankerraum
- 19: Distanzscheibe
- 20: Arbeitsraum des Stößels
- 21: Gehäuse
- 22: Feder

## Patentansprüche

1. Schaltbares Druckbegrenzungsventil mit einem Gehäuse (21), einem Elektromagneten (1), einer Vorrichtung (2) zum Öffnen und Verschließen eines Durchlasses für einen Fluidstrom zwischen einem P-Anschluss (4) und einem T-Anschluss (13), einem Stößel (3), einer ersten Feder (5) und einer zweiten Feder (6), wobei das Öffnen des Ventils durch die Kraftbilanz am Stößel (3) bestimmt ist, und wobei auf den Stößel die Druckkraft des Fluids am P-Anschluß (4), die Druckkraft des Fluids am T-Anschluss (13), die Kraft der ersten Feder (5) und die Kraft der zweiten Feder (6) einwirken, und wobei die Kraft der zweiten Feder (6) durch die Lage des Ankers (8) des Elektromagneten (1) verändert wird, und wobei das Ventil öffnet, wenn die Druckkraft am P-Anschluß (4) die Bilanz der anderen Kräfte überwiegt,
**dadurch gekennzeichnet, dass**
die Vorrichtung (2) aus einer Membran (7) und einem Dichtsitz (12) besteht, der Anker (8) des Elektromagneten (1) nicht direkt oder indirekt auf die Membran (7) aufschlägt, sondern lediglich die Feder (6) mehr oder weinger stark spannt, die ihrerseits mittels des Stößels (3) die Membran (7) gegen den Dichtsitz (12) drückt, und die Membran (7) zwischen dem Gehäuse (21) einerseits und dem Magnetpol (10) oder einer daran abgestützen Distanzscheibe (19) andererseits abdichtend eingespannt ist, wobei die kraftübertragende Funktion der Distanzscheibe (19) auch durch eine Mehrzahl von Bauteilen wahrgenommen werden kann.

2. Druckbegrenzungsventil nach Anspruch 1, **dadurch gekennzeichnet, dass** die Federn (5) und (6) gegensinnig auf den Stößel (3) wirken, wobei im ausgeschalteten Zustand des Elektromagneten die Kraft der Feder (5) größer ist als die Kraft der Feder (6).

3. Druckbegrenzungsventil nach Anspruch 1, **dadurch gekennzeichnet, dass** die Federn (5) und (6) gleichsinnig auf den Stößel (3) wirken oder bei gegensinniger Wirkung die Feder (6) im ausgeschalteten Zustand des Elektromagneten eine größere Kraft besitzt als die Feder (5).

4. Druckbegrenzungsventil nach Anspruch 1, 2 oder 3, **dadurch gekennzeichnet, dass** im eingeschalteten Zustand des Elektromagneten (1) die Feder (6) über den Stößel (3) die Membran (7) in die Richtung zum Dichtsitz (12) drückt, aber die Feder (6) aufgrund ihrer Auslegung dem Anker (8) des Magneten ermöglicht, bis zu einem mechanischen Anschlag (9) vorzufahren.

5. Druckbegrenzungsventil nach Anspruch 4, **dadurch gekennzeichnet, dass** der Anker (8) im eingeschalteten Zustand des Magneten (1) gegen eine nichtmagnetische Scheibe anschlägt, deren Dicke besonders gering ist, zum Beispiel 0,1 mm.

6. Druckbegrenzungsventil nach Anspruch 4, **dadurch gekennzeichnet, dass** der Anker (8) im eingeschalteten Zustand des Magneten (1) gegen den Magnetpol (10) anschlägt, dessen Material magnetisierbar ist, aber eine geringe Neigung zur Ausbildung von magnetischer Remanenz aufweist.

7. Druckbegrenzungsventil nach Anspruch 1, **dadurch gekennzeichnet, dass** der Anker (8) im eingeschalteten Zustand des Magneten (1) gegen die Feder (22) drückt und die Feder (6) entlastet, wobei im ausgeschalteten Zustand des Magneten die Feder (22) den Anker (8) gegen den Anschlag (9) drückt und die Feder (6) belastet.

8. Verfahren zum Betrieb eines schaltbaren Druckbegrenzungsventils nach Anspruch 1, **dadurch gekennzeichnet, dass** die Spule (11) des Magneten (1) mit einer elektrischen Leistung beaufschlagt wird, die durch eine gesteuerte mittlere Spannung charakterisiert ist, wobei die Spannung nach dem Einschalten für eine kurze Zeit (zum Beispiel 50 ms) auf einen hohen Wert (z. B. 12V) eingestellt wird, und danach auf einen erheblich geringeren, aber zum Halten des Magneten bei kleinem Luftspalt noch ausreichend hohen Wert eingestellt wird, wobei die Veränderung der mittleren Spannung zum Beispiel durch Pulsweitenmodulation geschieht.

9. Verfahren zum Betrieb eines schaltbaren Druckbegrenzungsventils nach Anspruch 1, **dadurch gekennzeichnet, dass** die Spule (11) des Magneten (1) mit einer elektrischen Leistung beaufschlagt wird, die durch einen geregelten mittleren Strom charakterisiert ist, wobei der Sollwert für den Strom nach dem Einschalten für eine kurze Zeit (zum Beispiel 50 ms) auf einen hohen Wert (zum Beispiel 2A) durch einen Sollwertgeber (14) vorgegeben wird, und danach zum Halten des Magneten bei kleinem Luftspalt auf einen erheblich geringeren, aber noch ausreichend hohen Wert vorgegeben wird, wobei die Regelung des Stroms zum Beispiel durch eine Messung des Stroms mittels einer Strommesseinrichtung (16), einem Vergleicher (17), der den gemessenen Stom mit dem variablen Sollwert vergleicht, und einem Schaltregler (15) geschieht, der den Strom für die Spule (11) einstellt.

## Claims

1. Switchable pressure limiting valve with a housing (21), with an eletcromagnet (1), with a device (2) for opening and closing a passage for a fluid stream between a P-connection (4) and a T-connection (13), with a tappet (3) and with a first spring (5) and a second spring (6), the opening of a valve being determined by the balance of forces at the tappet (3), and the pressure force of the fluid at the P-connection (4), the pressure force of the fluid at the T-connection (13), the force of the first spring (5) and the force of the second spring (6) acting upon the tappet, and the force of the second spring (6) being varied by the position of the armature (8) of the electromagnet (1), and the valve opening when the pressure force at the P-connection (4) outweighs the balance of the other forces, **characterized in that**
the device (2) is composed of a diaphragm (7) and of a sealing seat (12), the armature (8) of the electromagnet (1) does not impinge onto the diaphragm (7) directly or indirectly, but instead merely tensions to a greater or lesser extent the spring (6) which in turn presses the diaphragm (7) against the sealing seat (12) by means of the tappet (3), and the diaphragm (7) is tension-mounted sealingly between the housing (21), on the one hand, and the magnetic pole (10) or a spacer disk (19) supported thereon, on the other hand, the force-transmitting function of the spacer disk (19) also being capable of being performed by a plurality of components.

2. Pressure limiting valve according to Claim 1, **characterized in that** the springs (5) and (6) act upon the tappet (3) contradirectionally, in the switched-off state of the electromagnet the force of the spring (5) being higher than the force of the spring (6).

3. Pressure limiting valve according to Claim 1, **characterized in that** the springs (5) and (6) act upon the tappet (3) codirectionally or, in the case of contradirectional action, in the switched-off state of the electromagnet the spring (6) possesses a higher force than the spring (5).

4. Pressure limiting valve according to Claim 1, 2 or 3, **characterized in that,** in the switched-on state of the electromagnet (1), the spring (6) presses the diaphragm (7) in the direction of the sealing seat (12) via the tappet (3), but the spring (6), by virtue of its design, enables the armature (8) of the magnet to move forward as far as a mechanical stop (9).

5. Pressure limiting valve according to Claim 4, **characterized in that,** in the switched-on state of the magnet (1), the armature (8) impinges against a nonmagnetic disk, the thickness of which is especilly small, for example 0.1 mm.

6. Pressure limiting valve according to Claim 4, **characterized in that,** in the switched-on state of the magnet (1), the armature (8) impinges against the magnetic pole (10), the material of which is magnetizable, but has a slight tendency to the generation of magnetic retentivity.

7. Pressure limiting valve according to Claim 1, **characterized in that,** in the switched on state of the magnet (1), the armature (8) presses against the spring (22) and relieves the spring (6), in the switched-off state of the magnet the spring (22) pressing the armature (8) agains the stop (9) and loading the spring (6).

8. Method for operating a switchable pressure limiting valve according to Claim 1, **characterized in that** the coil (11) of the magnet (1) is acted upon with electrical power which is **characterized by** a controlled average voltage, after switch-on the voltage being set at a high value (for example 12 V) for a short time (for example 50 ms) and then being set at a considerably lower value which, however, is still sufficiently high to hold the magnet in the case of a small air gap, the variation in the average voltage taking place, for example, by pulse width modulation.

9. Method for operating a switchable pressure limiting valve according to Claim 1, **characterized in that** the coil (11) of the magnet (1) is acted upon with electrical power which is **characterized by** a regulated average current, after switch-on the set value for the current being stipulated at a high value (for example 2A) by a set-value generator (14) for a short time (for example 50 ms) and then being stipulated at a considerably lower, but still sufficiently high value for holding the magnet in the case of a small air gap, the regulation of the current taking place, for example, by measurement of the current by means of a current measurement device (16), a comparator (17) which compares the measured current with the variable set value and a switching controller (15) which sets the current for the coil (11).

## Revendications

1. Soupape de limitation de pression commutable comportant un logement (21), un électroaimant (1), un dispositif (2) pour ouvrir et fermer un passage pour un flux de fluide entre un raccord P (4) et un raccord T (13), un poussoir (3), un premier ressort (5) et un deuxième ressort (6), dans laquelle l'ouverture de la soupape est déterminée par le bilan des forces sur le poussoir (3) et dans laquelle la force de pression du fluide sur le raccord P (4), la force de pression du fluide sur le raccord T (13), la force du premier ressort (5) et la force du deuxième ressort (6) agissent sur le poussoir, et dans laquelle la force du deuxième ressort (6) est modifiée par la position de l'ancre (8) de l'électroaimant (1), et dans laquelle la soupape s'ouvre, quand la force de pression sur le raccord P (4) surmonte le bilan des autres forces,
**caractérisée en ce que**
le dispositif (2) est constitué d'une membrane (7) et d'un siège d'étanchéité (12), l'ancre (8) de l'électroaimant (1) ne frappe pas directement ou indirectement contre la membrane (7), mais au contraire tend uniquement le ressort (6) plus ou moins fortement, qui de son côté presse au moyen du poussoir (3) la membrane (7) contre le siège d'étanchéité (12), et la membrane (7) est enserrée de manière étanche entre le logement (21) d'un côté et le pôle magnétique (10) ou un disque d'écartement (19) appuyé sur celui-ci d'un autre côté, dans laquelle la fonction de transmission de force du disque d'écartement (19) peut aussi être perçue par une pluralité de composants.

2. Soupape de limitation de pression selon la revendication 1, **caractérisée en ce que** les ressorts (5) et (6) agissent en sens opposé sur le poussoir (3), dans laquelle en l'état éteint d l'électroaimant la force du ressort (5) est plus grande que la force du ressort (6).

3. Soupape de limitation de pression selon la revendication 1, **caractérisée en ce que** les ressorts (5) et (6) agissent en sens opposé sur le poussoir (3) ou lors d'une action en sens opposé le ressort (6) en l'état éteint de l'électroaimant possède une plus grande force que le ressort (5).

4. Soupape de limitation de pression selon la revendication 1, 2 ou 3, **caractérisée en ce que** en l'état allumé de l'électroaimant (1) le ressort (6) presse par l'intermédiaire du poussoir (3) la membrane (7) dans la direction du siège d'étanchéité (12), mais le ressort (6) en raison de sa configuration permet à l'ancre (8) de l'aimant d'avancer jusqu'à une butée mécanique (9).

5. Soupape de limitation de pression selon la revendication 4, **caractérisée en ce que** l'ancre (8) en l'état allumé de l'aimant (1) bute contre un disque non magnétique, dont l'épaisseur est particulièrement minime, par exemple de 0,1 mm.

6. Soupape de limitation de pression selon la revendication 4, **caractérisée en ce que** l'ancre (8) en l'état allumé de l'aimant (1) bute contre le pôle magnétique (10), dont le matériau est magnétisable, mais présente une tendance moindre à réaliser une rémanence magnétique.

7. Soupape de limitation de pression selon la revendication 1, **caractérisée en ce que** l'ancre (8) en l'état allumé de l'aimant (1) presse contre le ressort (22) et décharge le ressort (6), dans laquelle en l'état éteint de l'aimant le ressort (22) presse l'ancre (8) contre la butée (9) et charge le ressort (6).

8. Procédé de fonctionnement d'une soupape de limitation de pression commutable selon la revendication 1, **caractérisé en ce que** la bobine (11) de l'aimant (1) est sollicitée avec une puissance électrique, qui est **caractérisée par** une tension moyenne commandée, dans laquelle la tension après la mise sous tension est réglée pendant une courte durée (par exemple 50 ms) sur une valeur élevée (par ex. 12V), et ensuite est réglée sur une valeur considérablement moindre, mais suffisamment élevée pour maintenir l'aimant en présence d'un petit entrefer, dans lequel la variation de la tension moyenne est effectuée par exemple par modulation à largeur d'impulsion.

9. Procédé de fonctionnement d'une soupape de limitation de pression commutable selon la revendication 1, **caractérisé en ce que** la bobine (11) de l'aimant (1) est sollicitée avec une puissance électrique, qui est **caractérisée par** un courant moyen régulé, dans lequel la valeur de consigne du courant après la mise sous tension est prescrite pendant une courte période (par exemple 50 ms) sur une valeur élevée (par exemple 2A) par un générateur de valeur de consigne (14), et ensuite est prescrite sur une valeur considérablement moindre, mais suffisamment élevée pour maintenir l'aimant en présence d'un petit entrefer, dans lequel la régulation du courant est effectuée par exemple par une mesure du courant au moyen d'un dispositif de mesure de courant (16), un comparateur (17), qui comparer la valeur mesurée avec la valeur de consigne variable, et un régulateur de commutation (15), qui règle le courant de la bobine (11).
